# EUROPEAN PATENT SPECIFICATION

(11) **EP 4 134 781 B1**
(45) Date of publication and mention of the grant of the patent: **27.11.2024**
(21) Application number: 21797464.1
(22) Date of filing: 28.04.2021
(51) Int. Cl.: G06F 1/16, H04M 1/02

(54) **SUPPORT MEMBER, DISPLAY MODULE, AND ELECTRONIC DEVICE**
TRÄGERELEMENT, ANZEIGEMODUL UND ELEKTRONISCHE VORRICHTUNG
ÉLÉMENT DE SUPPORT, MODULE D'AFFICHAGE ET DISPOSITIF ÉLECTRONIQUE

(30) Priority: 30.04.2020 CN 202020720093 U
(43) Date of publication of application: 15.02.2023
(73) Proprietor: Huawei Technologies Co., Ltd., Shenzhen, Guangdong 518129 (CN)
(72) Inventor: LV, Chengling, Shenzhen, Guangdong 518129 (CN); HUANG, Cong, Shenzhen, Guangdong 518129 (CN); CHEN, Wenhong, Shenzhen, Guangdong 518129 (CN)
(74) Representative: Gill Jennings & Every LLP
(86) International application number: PCT/CN2021/090522
(87) International publication number: WO 2021/218999

(56) References cited:
- WO-A1-2019/182380
- CN-A- 110 299 473
- CN-A- 110 767 098
- CN-A- 110 853 525
- CN-A- 110 874 988
- CN-U- 208 141 720
- CN-U- 208 141 720
- CN-U- 211 455 155
- CN-U- 212 484 202
- US-A1- 2018 097 197
- US-A1- 2020 273 379

## Description

### TECHNICAL FIELD

This application relates to the field of electronic device technologies, and in particular, to a support, a display assembly and an electronic device.

### BACKGROUND

A flexible display has advantages such as being light, thin, non-fragile, bendable, and wearable. Therefore, the flexible display is increasingly used in various electronic devices. However, due to creep performance of materials such as transparent polyimide (polyimide, PI) and an optical clear adhesive in the flexible display, the flexible display are prone to arch, wrinkle, and the like. To resolve this problem, a metal support is usually disposed under the flexible display to support the flexible display. In addition, a part of a material is hollowed out from a bending portion that is on the support and that corresponds to the flexible display to form a gap, to reduce impact of the metal support on bending performance of the flexible display, so that better dynamic bending performance is implemented. However, when a reliability test such as a front-side squeezing test or a falling ball test is performed on the flexible display, a failure problem such as a black spot occurs on the flexible display because the flexible display is easily squeezed at a position corresponding to the gap of the support.
CN208141720U relates a display device, including a flexible display panel with a bendable region and a flexible support attached to a back side of the flexible display panel, the flexible support includes a flexible support body, and a first part of the flexible support body corresponding to the bendable region is provided with a concave structure. US2018097197A1 discloses a flexible display device.

### SUMMARY

This application provides a support, a display assembly, and an electronic device, to ensure that the support can well support a display, while preventing a flexible display from being squeezed to cause a failure problem.

According to a first aspect, this application provides a support for a flexible display is accordance with appended claim 1.

In this application, a flexible strip is disposed in each gap of the hard plate layer, so that a display also has a support structure at a position corresponding to the gap of the hard plate layer. This avoids a failure problem such as a black spot that occurs because the display is easily squeezed at the position corresponding to the gap of the hard plate layer. In this application, there is a spacing between the flexible strip and a side wall of the gap in a width direction of the flexible strip, to ensure that a better support effect for the display is implemented, and ensure that a part of the bending area of the support can still have relatively good bending performance.

The support further includes a flexible layer. The hard plate layer includes a first surface and a second surface that are disposed opposite to each other in a thickness direction of the hard plate layer. The flexible layer is located on the first surface of the hard plate layer. The flexible strip is fastened to the flexible layer. The flexible layer covers at least the bending area.

The flexible layer is located on the first surface of the hard plate layer, so that when the display is disposed on the flexible layer, the flexible layer is located between the display and the hard plate layer. When the display is squeezed at the position corresponding to the gap of the hard plate layer, the flexible layer can further support the display and buffer squeeze stress, thereby further protecting the display, and avoiding a failure problem such as a black spot that occurs because the display is easily squeezed at a position corresponding to the gap of the support. In addition, because the flexible layer covers the bending area of the support 32, a supporting function for the display can be further implemented, so that mold mark, touch feeling, and the like of the display assembly can be further improved.

In some implementations, the flexible layer covers the bending area. A thickness of the hard plate layer located in the bending area is less than a thickness of the hard plate layer located in the support area. A thickness of the flexible layer is a difference between the thickness of the hard plate layer located in the bending area and the thickness of the hard plate layer located in the support area. The flexible layer covers the bending area, and a surface that is of the flexible layer and that is away from the flexible strip is coplanar with a part that is of the first surface and that is located in the support area.

In some implementations, the flexible layer covers the bending area and the two support areas. Both the first surface and a surface that is of the flexible layer and that is away from the flexible strip are smooth surfaces, and the surface that is of the flexible layer and that is away from the flexible strip is parallel to the first surface.

In some implementations, an edge of the flexible layer is embedded in the hard plate layer, so that the flexible layer is more firmly connected to the hard plate layer, to increase a service life of the support.

In some implementations, the hard plate layer includes the first surface and the second surface that are disposed opposite to each other in the thickness direction of the hard plate layer, and the spacing between the flexible strip and the side wall of the gap gradually increases in a direction from the first surface to the second surface, so that when the support is bent in the bending area, the flexible strip is squeezed relatively evenly by the side wall of the gap at each position in the thickness direction. In this way, when the support is bent, force is relatively evenly applied to a part located in the bending area. This helps prolong a service life of the support.

In some implementations, a width of the gap is the same at each position in a thickness direction of the support, and a width of the flexible strip gradually decreases in the direction from the first surface to the second surface of the hard plate layer.

In some implementations, a width of the flexible strip is the same at each position in a thickness direction of the support, and a width of the gap gradually increases in the direction from the first surface to the second surface of the hard plate layer.

In some implementations, a width of the gap is the same at each position in a thickness direction of the support, and the spacing between the flexible strip and the side wall of the gap is the same at each position in the thickness direction of the support.

In some implementations, the hard plate layer includes a first surface and a second surface that are disposed opposite to each other in a thickness direction of the hard plate layer, and the flexible strip includes a third surface and a fourth surface that are disposed opposite to each other in a thickness direction. A thickness of the flexible strip is the same as a thickness of the part that is of the hard plate layer and that is in the bending area. The third surface of the flexible strip is coplanar with the first surface of the part that is of the hard plate layer and that is in the bending area. The fourth surface of the flexible strip is coplanar with the second surface of the part that is of the hard plate layer and that is in the bending area, so that the display can be flat when being disposed on the support, and each position of the support can well support the display.

In some implementations, both the flexible layer and the flexible strip are made of a deformable elastic material, to ensure that the support has good support effect for the display, and has relatively good bending performance. In addition, when the support is bent, the flexible layer and the flexible strip can generate extrusion deformation or tensile deformation. While good bending performance is implemented, a size of the spacing between the flexible strip and the side wall of the gap is reduced as much as possible, to avoid a failure problem such as a black spot that occurs because the display is easily squeezed at the position corresponding to the gap of the support.

In some implementations, a material for making the flexible layer and a material for making the flexible strip are the same or different, and the flexible layer and the flexible strip are obtained by using a same process. This simplifies a manufacturing process and reduces manufacturing costs, and improves firmness of a connection between the flexible layer and the flexible strip.

In some implementations, a thickness of the flexible layer ranges from 0.01 mm to 0.05 mm. This ensures that the flexible layer has specific support performance, avoids impact on bendability of the support, and increases a thickness and a weight of the support as little as possible.

In some implementations, a thickness of the hard plate layer ranges from 0.02 mm to 0.15 mm. This ensures that the hard plate layer has specific support performance, and increases a thickness and a weight of the support as little as possible.

In some implementations, a width of the spacing between the flexible strip and the side wall of the gap in the width direction of the flexible strip ranges from 0.02 mm to 0.2 mm. This ensures that there is a specific spacing between the flexible strip and the side wall of the gap, so that the bending area of the support has relatively good bending performance, and avoids a failure problem such as a black spot that occurs because the display is squeezed at a position corresponding to the spacing due to an excessively large spacing.

According to a second aspect, this application provides a display assembly in accordance with appended claim 12.

In this application, a flexible strip is disposed in each gap of the hard plate layer. When the display is disposed on the support, the display also has a support structure at the position corresponding to the gap of the hard plate layer. This avoids a failure problem such as a black spot that occurs because the display is easily squeezed at the position corresponding to the gap of the support, and avoids a problem that occurs on the display when a reliability test such as a front-side squeezing test or a falling ball test is performed on a flexible display, so that the display assembly has relatively high reliability. In addition, in this application, there is a spacing between the flexible strip and a side wall of the gap in a width direction of the flexible strip, to ensure that a better support effect for the display is implemented, and ensure that a part of the bending area of the support can still have relatively good bending performance, thereby ensuring that the display assembly has relatively high reliability and also has relatively good bending performance.

According to a third aspect, this application further provides an electronic device in accordance with appended claim 13.Because the display assembly has relatively high reliability and also has relatively good bending performance, the electronic device can also have relatively high reliability and can have relatively good bendability.

### BRIEF DESCRIPTION OF DRAWINGS

FIG. 1 is a schematic diagram of a structure of an electronic device in an open state according to an embodiment of this application;
FIG. 2 is a schematic diagram of a structure of the electronic device shown in FIG. 1 in a closed state;
FIG. 3 is a schematic exploded partial view of the electronic device shown in FIG. 1;
FIG. 4 is a schematic diagram in which a rotation apparatus of the electronic device shown in FIG. 3 is mounted on a first housing and a second housing;
FIG. 5 is a schematic exploded view of a display assembly of the electronic device shown in FIG. 4;
FIG. 6 is a schematic sectional view of a display assembly of the electronic device shown in FIG. 4 in a closed state;
FIG. 7 is a partial schematic sectional diagram of an implementation of a display assembly of the electronic device shown in FIG. 4 at a line A-A;
FIG. 8 is a schematic diagram of a partial structure of a hard plate layer according to an implementation of this application;
FIG. 9 is an enlarged schematic diagram of a structure of the hard plate layer shown in FIG. 8 at a position B;
FIG. 10 is a schematic diagram of a structure of a bending area of a support at a position B in FIG. 8;
FIG. 11 is a schematic diagram of a partial structure of a support according to another implementation of this application;
FIG. 12 is a schematic diagram of a partial structure of a support according to another implementation of this application;
FIG. 13 is a schematic diagram of a partial structure of a display assembly according to another implementation of this application;
FIG. 14 is a schematic diagram of a partial structure of a support according to another implementation of this application; and
FIG. 15 is a schematic diagram of a partial structure of a display assembly according to another implementation of this application.

### DESCRIPTION OF EMBODIMENTS

The following describes technical solutions of embodiments in this application with reference to accompanying drawings.

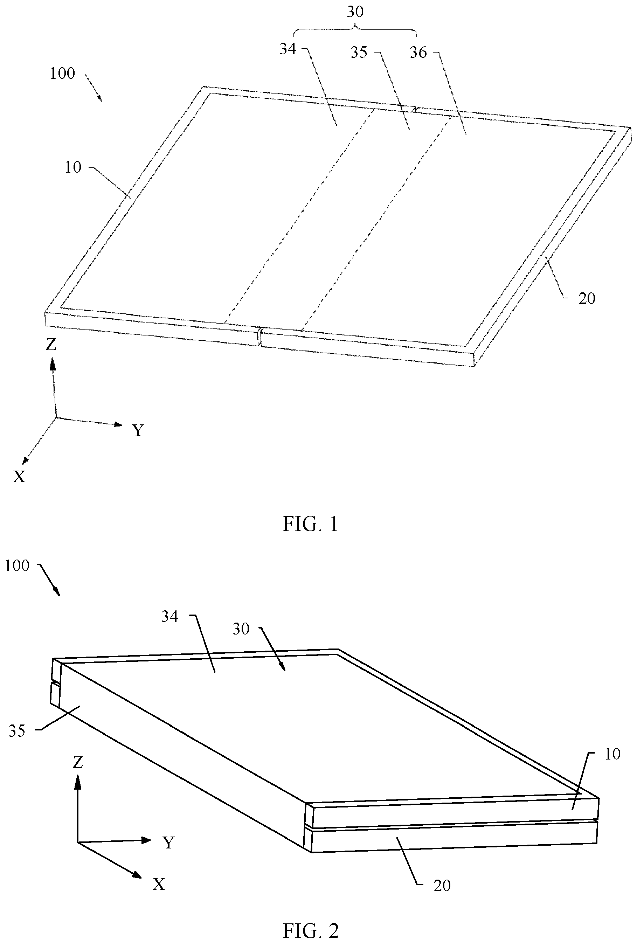

FIG. 1 is a schematic diagram of a structure of an electronic device in an open state according to an embodiment of this application. An electronic device 100 may be a tablet computer, a mobile phone, a camera, a personal computer, a notebook computer, a vehicle-mounted device, or a wearable device. In the embodiment shown in FIG. 1, descriptions are provided by using an example in which the electronic device 100 is a mobile phone. For ease of description, as shown in FIG. 1, a width direction of the electronic device 100 is defined as an X axis. A length direction of the electronic device 100 is a Y axis. A thickness direction of the electronic device 100 is a Z axis.

With reference to FIG. 1, FIG. 2 is a schematic diagram of a structure of the electronic device shown in FIG. 1 in a closed state.

The electronic device 100 includes a first housing 10, a second housing 20, and a display assembly 30. The first housing 10 and the second housing 20 can be unfolded relative to each other to be in an open state. The first housing 10 and the second housing 20 can alternatively be folded relative to each other to be in a closed state. In other words, the first housing 10 and the second housing 20 can be switched between the closed state and the open state. FIG. 1 shows that the electronic device 100 is in the open state. FIG. 2 shows that the electronic device 100 is in the closed state. In this application, an example in which the first housing 10 and the second housing 20 are unfolded and folded relative to an X-axis direction is used for description.

In addition, the display assembly 30 may be configured to display an image, a text, a video, and the like. The display assembly 30 includes a first part 34, a second part 35, and a third part 36 that are sequentially connected. The second part 35 is connected between the first part 34 and the third part 36. The first part 34, the second part 35, and the third part 36 are located on a same side of the first housing 10 and the second housing 20. In addition, the first part 34 is fastened to the first housing 10. The second part 35 is located between the first housing 10 and the second housing 20. The third part 36 is fastened to the second housing 20. The first part 34, the second part 35, and the third part 36 are arranged in a Y-axis direction. The second part 35 can be bent along an axis in the X-axis direction.

It may be understood that, when the electronic device 100 is in the open state, the first part 34, the second part 35, and the third part 36 are approximately at 180° (where a slight deviation is allowed, for example, 165°, 177°, or 185°). In this case, the display assembly 30 has a large continuous display area. In other words, the display assembly 30 can implement large-screen display. Therefore, user experience is better. When the electronic device 100 is in the closed state, the display assembly 30 is folded. Specifically, the second part 35 is bent. The first part 34 and the third part 36 overlap each other.

In addition, FIG. 2 shows that when the electronic device 100 is in the closed state, the first housing 10 and the second housing 20 are located between the first part 34 and the third part 36. In other words, the display assembly 30 may be folded outward. In another implementation, when the electronic device 100 is in the closed state, the display assembly 30 may be alternatively located between the first housing 10 and the second housing 20. In other words, the display assembly 30 may be folded inward.

In addition, both FIG. 1 and FIG. 2 show that the electronic device 100 may be folded once. In another implementation, the electronic device 100 may be alternatively folded for a plurality of times. Specifically, the electronic device 100 includes more housings that can rotate relative to each other, and the display assembly includes more parts that can be folded to each other. For example, in some implementations, the electronic device 100 may be folded twice. Specifically, compared with the electronic device 100 in FIG. 1 and FIG. 2, the electronic device 100 in this implementation further includes a third housing. The third housing may be folded relative to the second housing 20. The display assembly 20 further includes a fourth part and a fifth part. The fourth part is connected between the third part 36 and the fifth part, and the fifth part is fastened to the third housing. The fourth part may be bent along the axis in the X-axis direction, so that the third part 36 and the fifth part are folded to each other, and the third housing is folded relative to the second housing 20.

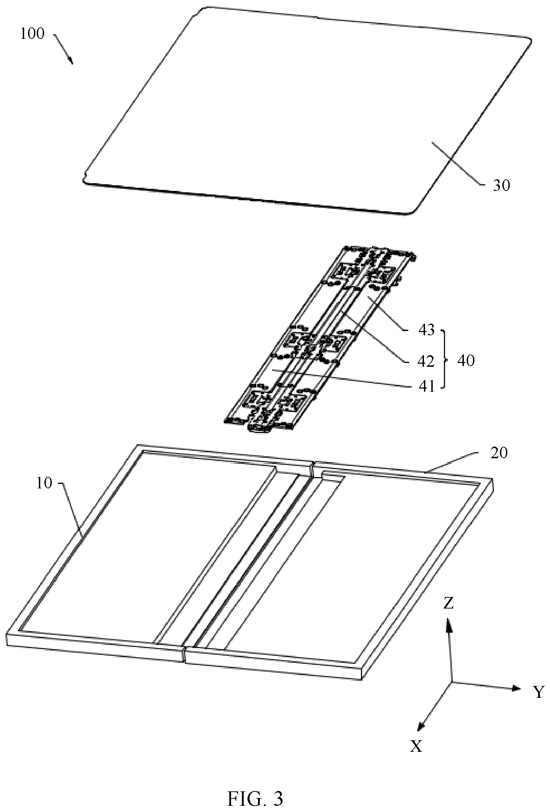

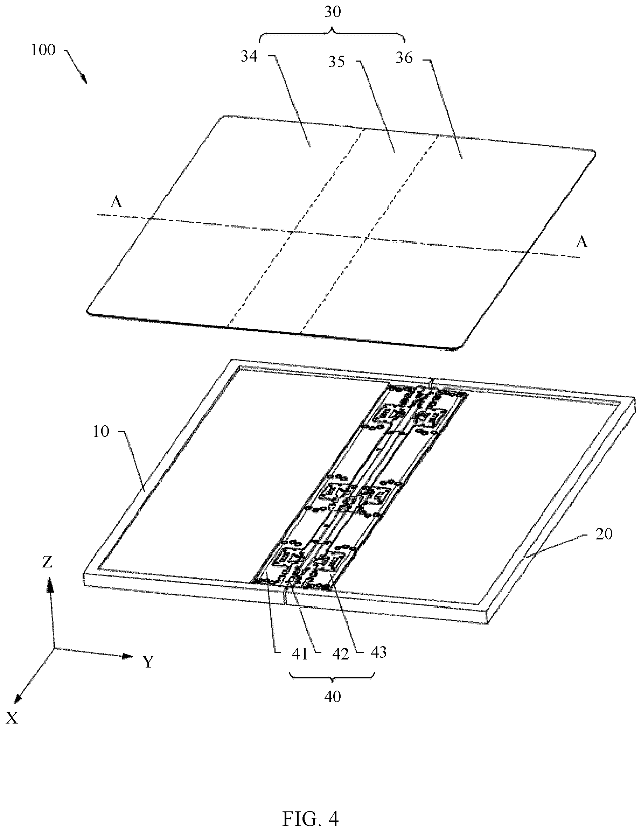

It may be understood that the first housing 10 and the second housing 20 have a plurality of connection relationships, for example, a rotatable connection, a slidable connection, a rotatable and slidable connection, and a detachable fastening connection. In this embodiment, an example in which the first housing 10 is rotatably connected to the second housing 20 is used for description. Refer to FIG. 3 and FIG. 4. FIG. 3 is a schematic exploded partial view of the electronic device 100 shown in FIG. 1. FIG. 4 is a schematic diagram in which a rotation apparatus of the electronic device 100 shown in FIG. 3 is mounted on the first housing 10 and the second housing 20. The electronic device 100 further includes a rotation apparatus 40. The rotation apparatus 40 is rotatably connected to the first housing 10 and the second housing 20. The rotation apparatus 40 enables the first housing 10 and the second housing 20 to rotate relative to each other for folding or unfolding. The rotation apparatus 40 is located between the first housing 10 and the second housing 20, and the rotation apparatus 40 is disposed opposite to the second part 35 of the display assembly 30.

The rotation apparatus 40 includes a first support 41, a second support 42, and a third support 43. The second support 42 is located between the first support 41 and the third support 43. In addition, the first support 41, the second support 42, and the third support 43 are disposed facing the second part 35 of the display assembly 30.

In addition, one side of the second support 42 is movably connected to the first support 41. The other side of the second support 42 is also movably connected to the third support 43. It may be understood that the movable connection may be a rotatable connection, a slidable connection, a rotatable and slidable connection, or a detachable fastening connection. In other words, the first support 41, the second support 42, and the third support 43 are movable with each other. In addition, one side that is of the first support 41 and that is away from the second support 42 is rotatably connected to the first housing 10. One side that is of the third support 43 and that is away from the second support 42 is rotatably connected to the second housing 20. In this case, the first support 41, the second support 42, and the third support 43 cooperate with each other, and the first housing 10 and the second housing 20 can rotate relative to each other for folding or unfolding.

It may be understood that, when the electronic device 100 is unfolded to the open state, the first support 41, the second support 42, and the third support 43 jointly support the second part 35 of the display assembly 30.

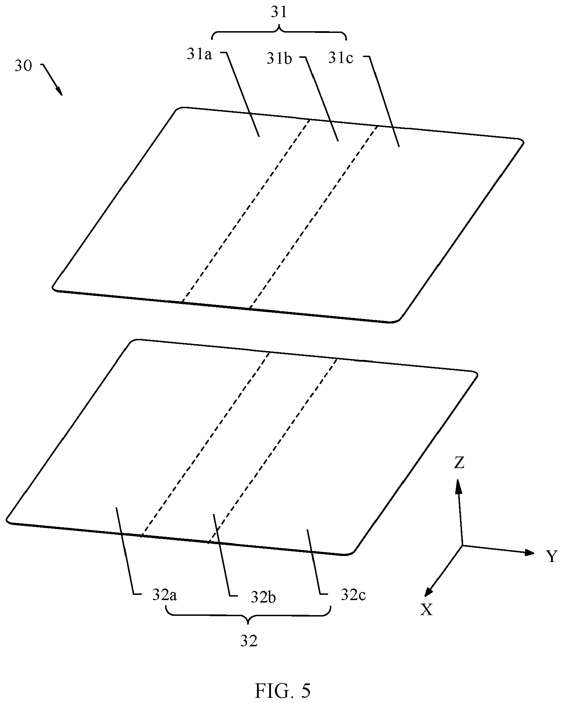

FIG. 5 is a schematic exploded view of a display assembly of the electronic device 100 shown in FIG. 4. The display assembly 30 includes a display 31 and a support 32. The display 31 is configured to display an image, a text, a video, and the like. The display 31 is a flexible display. For example, the display 31 may be an organic light-emitting diode (organic light-emitting diode, OLED) display, an active-matrix organic light-emitting diode (active-matrix organic light-emitting diode, AMOLED) display, a mini light-emitting diode (mini organic light-emitting diode) display, a micro light-emitting diode (micro organic light-emitting diode) display, a micro organic light-emitting diode (micro organic light-emitting diode) display, or a quantum dot light-emitting diode (quantum dot light-emitting diode, QLED) display.

Refer to FIG. 5, and with reference to FIG. 4, the display 31 includes two non-bending portions and a bending portion 31b connected between the two non-bending portions. The two non-bending portions are respectively a first non-bending portion 31a and a third non-bending portion 31c. In other words, the first non-bending portion 31a, the bending portion 31b, and the third non-bending portion 31c are sequentially connected. The first non-bending portion 31a is a part of the first part 34 of the display assembly 30. The bending portion 31b is a part of the second part 35. The third non-bending portion 31c is a part of the third part 36. The bending portion 31b can be bent.

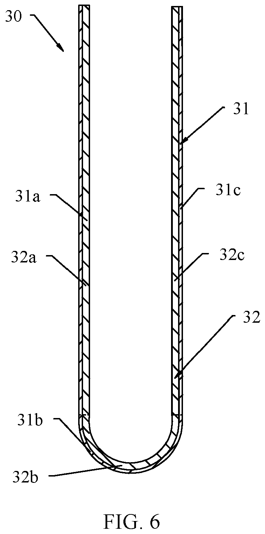

FIG. 6 is a schematic diagram of the display assembly 30 of the electronic device 100 shown in FIG. 4 in a closed state. When the electronic device 100 is in the closed state, the bending portion 31b is bent, the first non-bending portion 31a and the third non-bending portion 31c are disposed facing each other, and the first non-bending portion 31a and the third non-bending portion 31c are parallel to each other. FIG. 6 shows that the bending portion 31b is approximately semi-annular. In another implementation, the bending portion 31b may also be in a water drop shape or another shape.

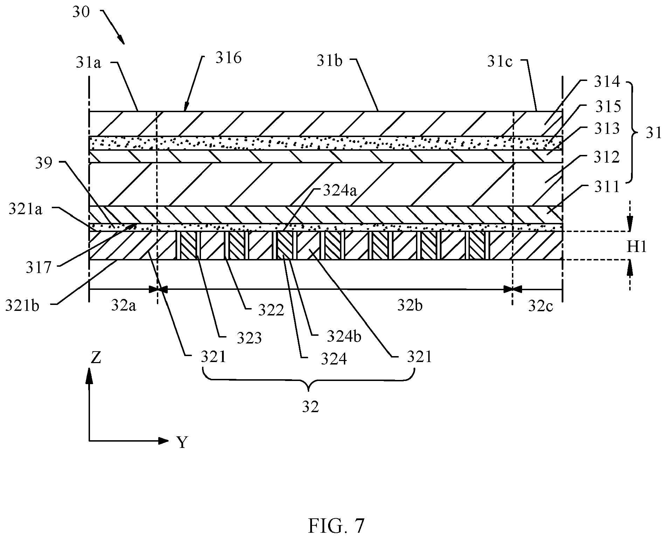

FIG. 7 is a partial schematic sectional diagram of an implementation of a display assembly of the electronic device 100 shown in FIG. 4 at a line A-A. When the electronic device 100 is in the open state, the first non-bending portion 31a, the bending portion 31b, and the third non-bending portion 31c are approximately at 180° (where a slight deviation is allowed, for example, 165°, 177°, or 185°).

Refer to FIG. 7 again. The display 31 may include a rear film 311, a display panel 312, a polarizer (Polarizer, POL) 313, and a protection cover 314 that are sequentially stacked. In other words, the display panel 312 is located between the rear film 311 and the polarizer 313. The protection cover 314 is fastened to a surface that is of the polarizer 313 and that is away from the display panel 312. The rear film 311 may be configured to support the display panel 312. The display panel 312 is configured to display an image, a video, and the like. The protection cover 314 is configured to protect the polarizer 313, the display panel 312, and the like.

In addition, the display 31 further includes an optical clear adhesive 315. The optical clear adhesive 315 is fastened between the polarizer 313 and the protection cover 314. The optical clear adhesive 315 not only enables display light emitted by the display panel 312 to propagate outside the electronic device 100, but also improves flexibility of the display assembly 30.

In an implementation, the display 31 may be a touchscreen. The display 31 can be configured to generate a touch signal based on a touch action of a user. For example, when the user taps an icon of camera software on the display 31, the display 31 can generate a touch signal based on the tapping action of the user, and transmit the touch signal to a processor (not shown in the figure) of the electronic device 100. The processor receives the touch signal, and starts the camera software based on the touch signal. The processor may be mounted on the first housing 10 (refer to FIG. 4), or may be mounted on the second housing 20 (refer to FIG. 4).

The display panel 312 may have a touch function. In other words, the display panel 312 has a function of a touch panel. For example, the touch panel is embedded into a light emitting layer of the display panel 312 by using an on-cell technology. In another implementation, the display panel 312 may alternatively not have a touch function. In this case, the display 31 further includes a touch panel (not shown in the figure). The touch panel may be fastened between the protection cover 314 and the polarizer 313, or may be located between the polarizer 313 and the display panel 312.

Refer to FIG. 7 again. The display 31 includes an outer surface 316 and an inner surface 317 that are disposed opposite to each other. The outer surface 316 of the display 31 is a surface that is of the display 31 and that faces the user when the user normally uses the electronic device 100. The inner surface 317 of the display 31 is surface that is of the display 31 and that faces the first housing 10 and the second housing 20 when the display assembly 30 is mounted on the first housing 10 and the second housing 20.

In addition, the support 32 is fastened to the inner surface 317 of the display 31. The support 32 is configured to support the display 31, to improve overall strength of the display assembly 30. In an implementation, the support 32 may be fastened to the inner surface 317 of the display 31 by using an optical clear adhesive (OCA), a PVB adhesive, a foam adhesive, a combination thereof, or the like. FIG. 7 shows that an optical clear adhesive 39 is disposed between the support 32 and the inner surface 317 of the display 31, to fasten the support 32 and the display 31 by using the optical clear adhesive 39.

Refer to FIG. 7 again. In a Z-axis direction, a height H1 of the support 32 ranges from 0.02 mm to 0.2 mm. In this case, a thickness of the support 32 is moderate, so that it can be ensured that the support 32 has better rigidity and flexibility, and the support 32 does not greatly increase a thickness and weight of the display assembly 30. In another embodiment, the height H1 of the support 32 may alternatively be in another numerical range.

Refer to FIG. 5 again. The support 32 includes two support areas and a bending area 32b connected between the two support areas. The two support areas are respectively a first support area 32a and a second support area 32c. In other words, the first support area 32a, the bending area 32b, and the second support area 32c are sequentially connected. It should be noted that, for ease of description, the first support area 32a, the bending area 32b, and the second support area 32c divide the support 32 into three areas, which are not actual structures. In FIG. 5, the first support area 32a, the bending area 32b, and the second support area 32c are distinguished from each other by using dashed lines.

Refer to FIG. 4 and FIG. 5. The two non-bending portions of the display 31 respectively correspond to the two support areas of the support 32. To be specific, the first non-bending portion 31a is disposed opposite to the first support area 32a, the second bending portion 31b is disposed opposite to the second support area 32c, and the bending portion 31b is disposed opposite to the bending area 32b. The support 32 may be bent at the bending area 32b. In this application, the support 32 is a structure whose rigidity is greater than that of the display 31, and can support the display 31 to some extent, to avoid problems such as arching, wrinkle, and collapse of the display 31. In addition, in this application, when a part that is of the support 32 and that is in the bending area 32b is bent to a same extent as the bending portion 31b of the display 31, a resilience force of the part that is of the support 32 and that is in the bending area 32b is greater than a resilience force of the bending portion 31b, so that when the electronic device 100 is in a folded state, the part in the bending area 32b can also better support the bending portion 31b.

Refer to FIG. 6 again. When the electronic device 100 is in the closed state, both the bending area 32b and the bending portion 31b are bent, and a part that is of the support 32 and that is located in the first support area 32a is parallel to a part that is of the support 32 and that is located in the second support area 32c. FIG. 6 shows that the support 32 is approximately annular. In another implementation, the support 32 may also be in a water drop shape or another shape.

Refer to FIG. 7 again. When the electronic device 100 is in the open state, the part that is of the support 32 and that is located in the first support area 32a, the part that is of the support 32 and that is located in the bending area 32b, and the part that is of the support 32 and that is located in the second support area 32c are approximately at 180° (where a slight deviation is allowed, for example, 165°, 177°, or 185°). FIG. 7 shows that the part that is of the support 32 and that is located in the first support area 32a, the part that is of the support 32 and that is located in the bending area 32b, and the part that is of the support 32 and that is located in the second support area 32c are at 180°.

Refer to FIG. 7. The support 32 includes a hard plate layer 321. At least one gap 322 is disposed on a part that is of the hard plate layer 321 and that corresponds to the bending area 32b. The gap 322 penetrates a thickness direction of the hard plate layer 321. An extension direction of the gap 322 is perpendicular to an arrangement direction of the two support areas. In this implementation, an arrangement direction of the first support area 32a and the second support area 32c is a length direction (a Y-axis direction in FIG. 7) of the electronic device 100. Therefore, the extension direction of the gap 322 is a width direction of the electronic device 100.

The hard plate layer 321 includes a first surface 321a and a second surface 321b that are disposed opposite to each other in the thickness direction (a Z-axis direction in FIG. 7) of the hard plate layer 321. When the display 31 is disposed on the support 32, the display 31 is located on a side that is of the hard plate layer 321 and that is close to the first surface 321a. It should be noted that the first surface 321a of the hard plate layer 321 is all surfaces that are of the hard plate layer 321 and that face the display 31. For example, when a thickness of a part that is of the hard plate layer 321 and that is located in the bending area 32b is different from a thickness of a part that is of the hard plate layer 321 and that is located in the support area, the first surface 321a of the hard plate layer 321 is jointly formed by a surface that is of the part that is of the hard plate layer 321 and that is located in the bending area 32b and that faces the display 31 and a surface that is of the part that is of the hard plate layer 321 and that is located in support area and that faces the display 31. In this case, a part that is of the first surface 321a and that is located in the bending area 32b is not coplanar with a part that is of the first surface 321a and that is located in the support area.

In this application, the hard plate layer 321 is made of a material with specific rigidity, so that the support 32 including the hard plate layer 321 has specific rigidity, to support the display 31. In addition, the hard plate layer 321 needs to have specific elasticity, to ensure that the display assembly 30 can be bent. Specifically, a material of the hard plate layer 321 may be metal materials such as copper, aluminum, beryllium copper, stainless steel, or titanium alloy, or may be a plastic plate with specific rigidity and elasticity. In this case, the hard plate layer 321 can have better hardness and rigidity, and has specific elasticity. In some implementations of this application, a thickness of the hard plate layer 321 ranges from 0.02 mm to 0.15 mm. This ensures that the hard plate layer 321 has a specific thickness, so that the hard plate layer 321 can meet required rigidity and elasticity, and prevent an excessively large thickness of the hard plate layer 321 from affecting a thickness and a weight of the display assembly. It should be noted that thicknesses of the hard plate layer 321 at different positions may be the same or different as required. The thicknesses of the hard plate layer 321 at different positions all range from 0.02 mm to 0.15 mm.

In this implementation, the hard plate layer 321 is an integrated structure, and may be obtained by cutting an integral plate by using a computer numerical control (computer numerical control, CNC) processing technology, or may be obtained by using extrusion molding, injection molding, compression molding, calendering, chemical corrosion, or the like. In another implementation, a part that is of the hard plate layer 321 and that is in the first support area 32a, a part that is of the hard plate layer 321 and that is in the bending area 32b, and a part that is of the hard plate layer 321 and that is in the second support area 32c may also be separately processed, and then connected in a welding manner, a snap-fit fastening manner, or the like, to obtain the hard plate layer 321.

In this application, at least one gap 322 is disposed on a part that is of the hard plate layer 321 and that corresponds to the bending area 32b, and an extension direction of the gap 322 is a width direction of the electronic device 100. Therefore, flexibility of the hard plate layer 321 located in the bending area 32b can be improved, to further avoid impact of the hard plate layer 321 on bending performance of the display assembly 30, and improve bendable performance of the display assembly 30. It should be noted that, in this application, the extension direction of the gap 322 is the width direction of the electronic device 100, but a slight deviation, for example, 155°, 166°, or 177°, may also be allowed.

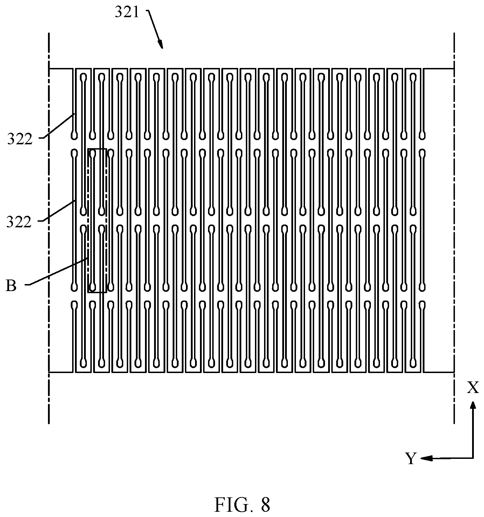

FIG. 8 is a schematic diagram of a partial structure of the hard plate layer 321 according to an implementation of this application. In this implementation, a plurality of gaps 322 are disposed on the hard plate layer 321, and the plurality of gaps 322 are arranged according to a specific periodic rule. Therefore, rigidity of a part that is of the hard plate layer 321 and that is located in the bending area 32b can be ensured, to ensure a support effect for the display 31, and further improve flexibility of the part that is of the hard plate layer 321 and that is located in the bending area 32b. Specifically, the part that is of the hard plate layer 321 and that corresponds to the bending area 32b includes a plurality of columns of gaps 322 disposed in a direction (a Y-axis direction in FIG. 8) from the first support area 32a to the second support area 32c, and each column of gaps 322 includes at least one gap 322. When a same column of gaps 322 includes a plurality of gaps 322, the plurality of gaps 322 located in the same column are arranged in a width direction (an X-axis direction in FIG. 8) of the electronic device 100. Adjacent columns of gaps 322 are arranged in a staggered manner. In other words, a direction of a connection line between ends of the adjacent columns of gaps 322 is different from the Y-axis direction. In some implementations, the adjacent columns of gaps 322 may alternatively be not staggered. In other words, the direction of the connection line between the ends of the adjacent columns of gaps 322 is the same as the Y-axis direction. In this implementation, the adjacent columns of gaps 322 are arranged in a staggered manner, so that flexibility of the part that is of the hard plate layer 321 and that is located in the bending area 32b can be improved, and rigidity of the part that is of the hard plate layer 321 and that is located in the bending area 32b can be retained as much as possible, to ensure flexibility of the display panel and ensure a support effect for the display 31. It may be understood that, at an edge position of the hard plate layer 321, only a part of the gap 322 may be disposed due to space limitation. For example, in FIG. 8, a first column of gaps 322 closest to the first support area 32a includes one entire gap 322 and a half gap 322 located at both ends of the entire gap 322.

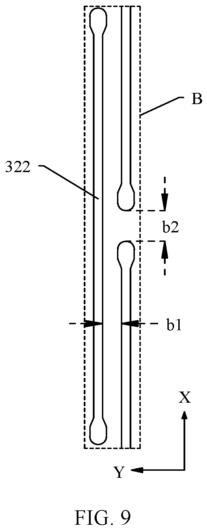

FIG. 9 is an enlarged schematic diagram of a structure of the hard plate layer 321 shown in FIG. 8 at a position B. In the Y-axis direction, a width of a spacing part between two adjacent columns of gaps 322 is b1. In an implementation, b1 ranges from 0.2 mm to 0.3 mm. For example, b1 is equal to 0.2 mm, 0.22 mm, 0.26 mm, 0.29 mm, or 0.3 mm. In this way, in the Y-axis direction, there is a relatively large quantity of remaining materials between two adjacent gaps 322, to ensure that the hard plate layer 321 has better strength.

Refer to FIG. 9 again. In the X-axis direction, a length b2 of a spacing part between two adjacent gaps 322 in a same column of gaps 322 ranges from 0.2 mm to 0.6 mm. For example, b2 is equal to 0.4 mm, 0.44 mm, 0.5 mm, 0.55 mm, or 0.6 mm. In this way, in the X-axis direction, there is a relatively large quantity of remaining materials between two adjacent gaps 322, to ensure that the hard plate layer 321 has better strength.

A shape of the gap 322 may be randomly designed based on an actual requirement. For example, in an implementation of FIG. 9, a middle part of the gap 322 is in a rectangular strip shape, and two ends of the middle part are expanded into a circle, a rectangle with a width greater than that of the middle part, or another shape, so that the gap 322 is approximately in a dumbbell shape. In some implementations, the gap 322 may alternatively be directly in shapes such as a rectangular strip shape and an elliptical strip shape.

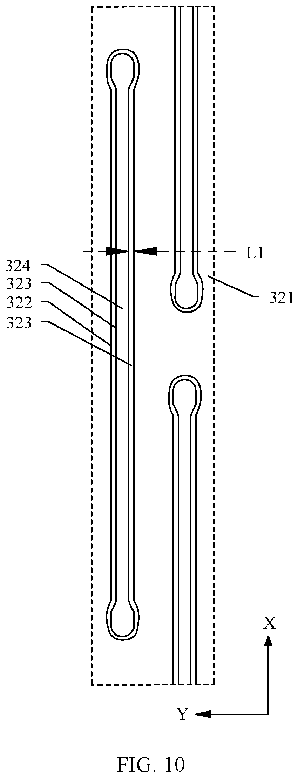

Refer to FIG. 10 and FIG. 7. FIG. 10 is a schematic diagram of a structure of the bending area 32b of the support 32 at the position B in FIG. 8. A flexible strip 324 is disposed in each gap 322, and a length direction of the flexible strip 324 is the same as the extension direction of the gap 322, that is, the length direction of the flexible strip 324 is the width direction (an X-axis direction in FIG. 10) of the electronic device 100. Both ends in the length direction of the flexible strip 324 may be fastened to the gap 322. Alternatively, in some implementations, the flexible strip 324 is directly fastened to the display 31 by using the optical clear adhesive 39, to ensure that the flexible strip 324 is fastened relative to the hard plate layer 321. In this application, the flexible strip 324 is disposed in each gap 322, so that the display 31 also has a support structure at a position corresponding to the gap 322 of the hard plate layer 321. This avoids a failure problem such as a black spot that occurs because the display 31 is easily squeezed at a position corresponding to the gap 322 of the support 32.

In this implementation, the flexible strip 324 includes a third surface 324a and a fourth surface 324b that are disposed opposite to each other in a thickness direction. A thickness of the flexible strip 324 is the same as a thickness of the part that is of the hard plate layer 321 and that is in the bending area 32b. The third surface 324a of the flexible strip 324 is coplanar with the first surface 321a of the part that is of the hard plate layer 321 and that is in the bending area 32b, so that the display 31 can remain flat when being disposed on the support 32. In addition, the fourth surface 324b of the flexible strip 324 is coplanar with the second surface 321b of the part that is of the hard plate layer 321 and that is in the bending area 32b, so that since the support 32 is flattened, a position of the flexible strip 324 is not suspended, and each position of the support 32 can well support the display 31. It may be understood that, due to impact of manufacturing precision of the support 32 or another condition, there may be a small distance between the fourth surface 324b of the flexible strip 324 and the second surface 321b of the part that is of the hard plate layer 321 and that is in the bending area 32b, or it may be considered that the fourth surface 324b of the flexible strip 324 are basically coplanar with the second surface 321b of the part that is of the hard plate layer 321 and that is in the bending area 32b.

In this application, there is a spacing 323 between the flexible strip 324 and a side wall of the gap 322 in a width direction of the flexible strip 324, to ensure that a better support effect for the display 31 is implemented, and ensure that a part of the bending area 32b of the support 32 can still have relatively good bending performance. The width direction of the flexible strip 324 is perpendicular to a length direction of the flexible strip 324, and is a length direction (a Y-axis direction in FIG. 10) of the electronic device 100. It should be noted that a material for making the flexible strip 324 is a deformable elastic material. Therefore, when a part that is of the support 32 and that corresponds to the bending area 32b is bent, and two sides in the width direction (the Y-axis direction in FIG. 10) of the flexible strip 324 are squeezed by side walls in a width direction (the Y-axis direction in FIG. 10) of the gap 322, the flexible strip 324 can be compressed and deformed to some extent. Therefore, a width L1 (that is, a size of the spacing 323 in the Y-axis direction in FIG. 10) of the spacing 323 may be set to be relatively small. This can meet bending performance of the support 32, and avoid a failure problem such as a black spot that occurs because the display 31 is easily squeezed at a position corresponding to the spacing 323. Specifically, the material for making the flexible strip 324 may be rubber, foam, thermoplastic polyurethanes (Thermoplastic polyurethanes, TPU), thermoplastic elastomer (Thermoplastic Elastomer, TPE), or the like.

In some implementations of this application, the width L1 of the spacing 323 may range from 0.02 mm to 0.2 mm. It should be noted that, in some implementations of this application, a shape of the flexible strip 324 may be a structure that is the same as or different from a shape of the gap 322, and sizes of the spacing 323 between the flexible strip 324 and the side wall of the gap 322 at different positions may be the same or different. In an implementation shown in FIG. 9, the flexible strip 324 has a same shape as the gap 322, that is, is of a dumbbell-shaped structure. Therefore, the sizes of the spacing 323 between the flexible strip 324 and the side wall of the gap 322 at any position are the same. In some other implementations of this application, a shape of the flexible strip 324 may be a structure different from a shape of the gap 322. For example, the gap 322 is in an approximate dumbbell shape, and the flexible strip 324 is a rectangular strip shape. In this case, the sizes of the spacing 323 between the flexible strip 324 and the side wall of the gap 322 at different positions are different, but the width D1 of the spacing 323 is still within a specified range, so that an effect of this application can still be implemented.

In this application, there is the spacing 323 between the side wall of the gap 322 and both sides of the flexible strip 324 in the width direction, and sizes of the spacing 323 between the two sides of the flexible strip 324 in the width direction and the side wall of the gap 322 may be the same or different. In this implementation, the sizes of the spacing 323 between the two sides of the flexible strip 324 in the width direction and the side wall of the gap 322 are the same, so that when the display assembly 30 is bent, squeezing force between the two sides of the flexible strip 324 in the width direction and the side wall of the gap 322 is basically the same. In this case, force is relatively evenly applied to a part that is of the support 32 and that is located in the bending area 32b. This helps prolong a service life of the support 32.

In this implementation, a width of the gap 322 on the hard plate layer 321 is the same at all locations in the thickness direction (that is, the Z-axis direction in FIG. 7) of the support 32. In other words, a cross section of the gap 322 in a direction perpendicular to the extension direction of the gap 322 is a rectangle. The spacing 323 between the flexible strip 324 and the side wall of the gap 322 is the same at each position in the thickness direction of the support 32. In other words, a cross section of the flexible strip 324 in a direction perpendicular to the length direction of the flexible strip 324 is also a rectangle, so that a width of the spacing 323 between the side wall of the gap 322 and both sides of the flexible strip 324 in the width direction is the same at different positions in the thickness direction (the Z-axis direction in FIG. 7) of the support 32.

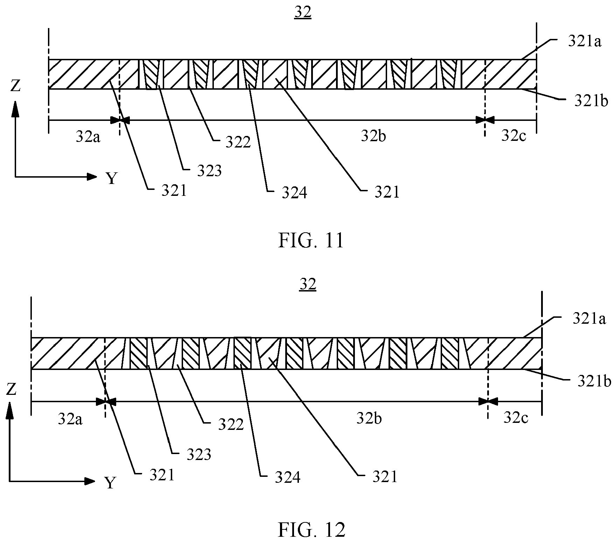

FIG. 11 is a schematic diagram of a partial structure of the support 32 according to another implementation of this application. A difference between the support 32 in this implementation and the support 32 in FIG. 7 lies in that the spacing 323 between the flexible strip 324 and the side wall of the gap 322 gradually increases in a direction from the first surface 321a to the second surface 321b. Specifically, in this implementation, the width of the gap 322 is the same at each position in the thickness direction of the support 32. In other words, a cross section of the gap 322 in a direction perpendicular to the extension direction of the gap 322 is a rectangle. A width of the flexible strip 324 gradually decreases in the direction from the first surface 321a to the second surface 321b of the hard plate layer 321. In other words, a cross section of the flexible strip 324 in a direction perpendicular to an extension direction of the flexible strip 324 is a trapezoid, and a width of a side that is of the flexible strip 324 and that is close to the first surface 321a is greater than a width of a side that is of the flexible strip 324 and that is close to the second surface 321b. In this case, the spacing 323 between the flexible strip 324 and the side wall of the gap 322 gradually increases in the direction from the first surface 321a to the second surface 321b. When the display assembly 30 is folded in an outward folding manner, the first surface 321a of the support 32 is compressed and deformed to a less extent than the second surface 321b. In this case, a cross section of the gap 322 of the support 32 in a direction perpendicular to a length direction of the gap 322 is deformed from a rectangle to a trapezoid, and an opening that is of the trapezoidal gap 322 and that is located on the first surface 321a is greater than the second surface 321b. In this implementation, the flexible strip 324 is set to a structure whose width gradually decreases in the direction from the first surface 321a to the second surface 321b of the hard plate layer 321, so that when the display assembly is bent, a shape of the flexible strip 324 is basically the same as a shape of the deformed gap 322. In this case, the flexible strip 324 can be squeezed relatively evenly by the side wall of the gap 322 at each position in the thickness direction, and when the support 32 is bent, force is relatively evenly applied to a part located in the bending area 32b. This helps prolong a service life of the support 32.

FIG. 12 is a schematic diagram of a partial structure of the support 32 according to another implementation of this application. A difference between the support 32 in this implementation and the support 32 in FIG. 11 lies in that, in this implementation, the width of the gap 322 gradually increases in the direction from the first surface 321a to the second surface 321b of the hard plate layer 321. In other words, a cross section of the gap 322 in a direction perpendicular to the extension direction of the gap 322 is a trapezoid, and an opening that is of the gap 322 and that is located on the first surface 321a is less than an opening that is of the gap 322 and that is close to the second surface 321b. The width of the flexible strip 324 is the same at each position in the thickness direction of the support 32. In other words, a cross section of the flexible strip 324 in a direction perpendicular to the extension direction of the flexible strip 324 is a rectangle, so that the spacing 323 between the flexible strip 324 and the side wall of the gap 322 gradually increases in the direction from the first surface 321a to the second surface 321b. When the display assembly 30 is folded in an outward folding manner, the first surface 321a of the support 32 is compressed and deformed to a less extent than the second surface 321b. In this case, a cross section of the gap 322 of the support 32 in a direction perpendicular to the length direction of the gap 322 is deformed from a trapezoid to an approximately rectangular structure. In this implementation, a cross section of the flexible strip 324 in the direction perpendicular to the extension direction of the flexible strip 324 is a rectangular structure, so that when the display assembly is bent, a shape of the flexible strip 324 is basically the same as a shape of the deformed gap 322. In this case, the flexible strip 324 can be squeezed relatively evenly by the side wall of the gap 322 at each position in the thickness direction, and when the support 32 is bent, force is relatively evenly applied to a part located in the bending area 32b. This helps prolong a service life of the support 32. In addition, because the thickness of the flexible strip 324 at each position is uniform, support performance of the flexible strip 324 at each position is even, so that the display 31 can be well supported.

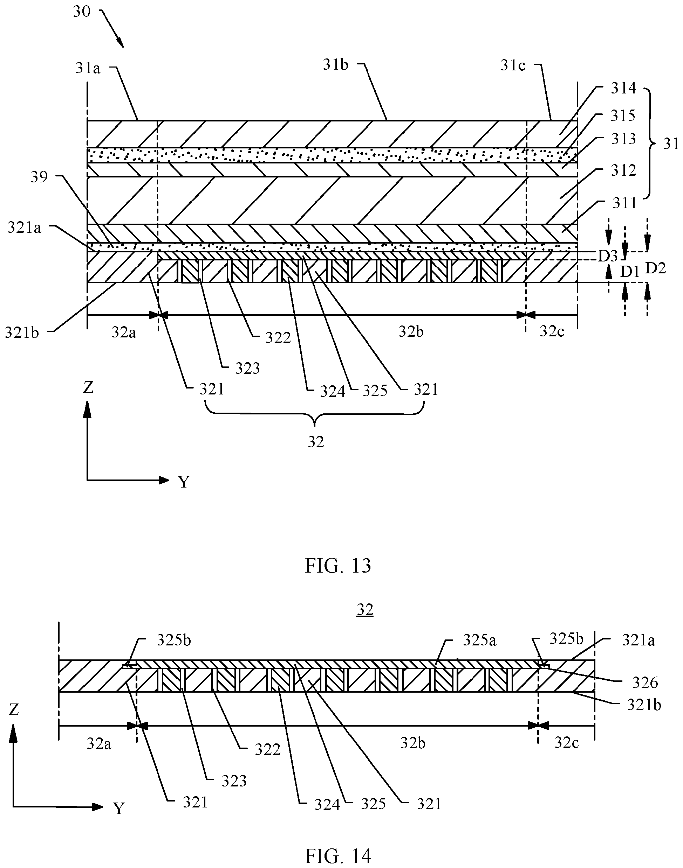

FIG. 13 is a schematic diagram of a partial structure of the display assembly 30 according to the invention. A difference between the support 32 in Fig. 13 and the support 32 in FIG. 10 lies in that, the support 32 further includes a flexible layer 325. The flexible layer 325 is located on the first surface 321a of the hard plate layer 321. When the display 31 is stacked on the support 32, the flexible layer 325 is located between the display 31 and the support 32. The flexible strip 324 is fastened to the flexible layer 325, and the flexible layer 325 covers at least the bending area 32b. In other words, the flexible layer 325 can cover only the bending area 32b of the hard plate layer 321, or may cover the bending area 32b, the first support area 32a, and the second support area 32c of the hard plate layer 321.

In an implementation, the flexible layer 325 can cover only the bending area 32b of the hard plate layer 321. Specifically, in this implementation, a thickness of a part that is of the hard plate layer 321 and that is located in the bending area 32b is D1, a thickness of a part that is of the hard plate layer 321 and that is located in the first support area 32a and the second support area 32c is D2, and D1 is less than D2. A thickness of the flexible layer 325 is D3, and D3 is a difference between D2 and D1. To be specific, when the flexible layer 325 covers the bending area 32b of the hard plate layer 321, a surface that is of the flexible layer 325 and that is away from the flexible strip 324 is coplanar with a part that is of the first surface 321a and that is located in the support area.

In an implementation, the flexible layer 325 may also be made of a deformable elastic material, for example, a rubber material, a foam material, a TPU material, or a TPE material. The material for making the flexible layer 325 may be the same as the material for making the flexible strip 324, or may be different from the material for making the flexible strip 324. In this implementation, both the material for making the flexible layer 325 and the material for making the flexible strip 324 are rubber materials, so that a manufacturing process can be further simplified, and the flexible layer 325 is more firmly connected to the flexible strip 324. In some other implementations of this application, the material for making the flexible layer 325 may alternatively be different from the material for making the flexible strip 324. For example, in some implementations, the material for making the flexible layer 325 is foam, and the material for making the flexible strip 324 is rubber.

In some implementations, the flexible layer 325 and the flexible strip 324 may be obtained by using a same process, so that the manufacturing process is further simplified, and the flexible layer 325 is more firmly connected to the flexible strip 324. Specifically, the flexible layer 325 and the flexible strip 324 may be integrally formed by using injection molding, compression molding, calendering, or the like.

In an implementation, the flexible layer 325 is located between the display 31 and the hard plate layer 321, so that when the display 31 is squeezed at a position corresponding to the gap 322 of the hard plate layer 321, the flexible layer 325 can further support the display 31 and buffer squeeze stress, thereby further protecting the display 31, and avoiding a failure problem such as a black spot that occurs because the display is easily squeezed at the position corresponding to the gap 322 of the support 32. In addition, because the flexible layer 325 covers the bending area 32b of the support 32, a supporting function for the display 31 can be further implemented, so that mold mark, touch feeling, and the like of the display assembly 30 can be further improved. Specifically, the flexible layer 325 further supports the display 31, so that when the display assembly 30 is folded, a contour of the gap 322 of the hard plate layer 321 is not easily presented on the display 31, to improve mold mark, touch feeling, and the like of the display assembly 30.

In an implementation, to enable the flexible layer 325 to well support the display 31, and avoid impact of the flexible layer 325 on bending performance of the display assembly 30 as much as possible, the thickness D2 of the flexible layer 325 needs to be within a specific range. In some implementations of this application, the thickness D3 of the flexible layer 325 ranges from 0.01 mm to 0.05 mm.

In some implementations of this application, an edge of the flexible layer 325 is embedded in the hard plate layer 321, so that the flexible layer 325 is more firmly connected to the hard plate layer 321, to increase a service life of the support 32. For example, FIG. 14 is a schematic diagram of a partial structure of the support 32 according to another implementation of this application. A difference between this implementation and the implementation shown in FIG. 12 lies in that, in this implementation, the flexible layer 325 includes a middle area 325a and edge areas 325b located on two sides of the middle area 325a, and a thickness of the edge area 325b of the flexible layer 325 is less than a thickness of the middle area 325a, so that an edge of the flexible layer 325 forms a stepped structure. A thickness of a part that is of the hard plate layer 321 and that is located in the bending area 32b is less than a thickness of a part that is of the hard plate layer 321 and that is located in the first support area 32a and the second support area 32c. A groove 326 is disposed on a side that is of the first support area 32a and the second support area 32c and that is close to the bending area 32b. When the flexible layer 325 is disposed in the bending area 32b of the hard plate layer 321, the edge area 325b of the flexible layer 325 is embedded in the groove 326 of the first support area 32a and the second support area 32c of the hard plate layer 321. In addition, a surface that is of the flexible layer 325 and that is away from the flexible strip 324 is coplanar with a part that is of the first surface 321a of the hard plate layer 321 and that is located in the support area, to ensure that a surface that is of the support 32 and that faces the display 31 is flat, and ensure that the support 32 well supports the display 31. In this implementation, the support 32 may be obtained by using injection molding. To be specific, after a hard plate is first formed in a mold, the flexible layer 325 is formed through molding again. In this way, the flexible layer 325 and the hard plate part form an integrated structure, to simplify a manufacturing process, and improve firmness of a connection between the flexible layer 325 and the hard plate part.

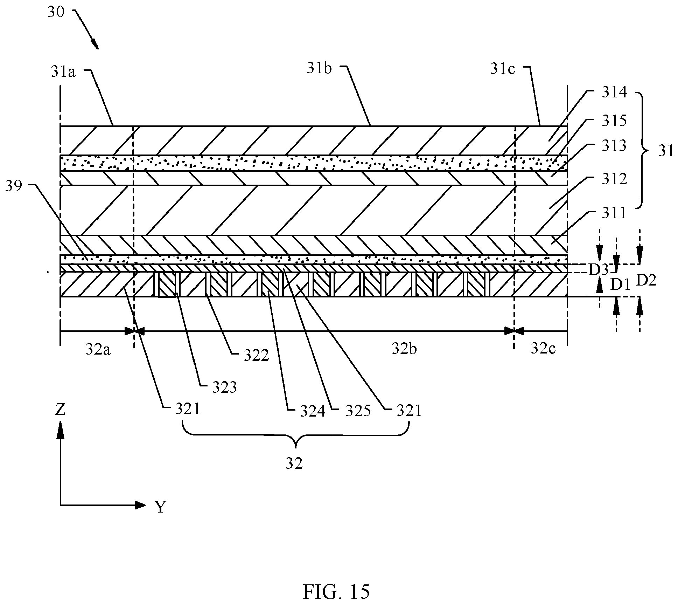

FIG. 15 is a schematic diagram of a partial structure of the display assembly 30 according to another implementation of this application. A difference between the support 32 in this implementation and the support 32 in FIG. 13 lies in that, in this implementation, the bending area 32b, the first support area 32a, and the second support area 32c of the hard plate have a same thickness. The flexible layer 325 covers the bending area 32b, the first support area 32a, and the second support area 32c. Both a surface that is of the flexible layer 325 and that is away from the flexible strip 324 and the first surface 321a of the hard plate layer 321 are smooth surfaces, and the surface that is of the flexible layer 325 and that is away from the flexible strip 324 is parallel to the first surface that is of the hard plate layer 321 and that is located in the support area. In this implementation, the flexible layer 325 can well support the display 31 at each position. In addition, because the flexible layer 325 is made of an elastic material and can provide a buffer for the display 31, when the display 31 receives impact such as vibration or collision, the flexible layer 325 can have a buffer function, to reduce a risk of damage to the display 31.

## Claims

1. A support (32) for a flexible display, comprising two support areas and a bending area (32b) connected between the two support areas, wherein the support is configured to be bent in the bending area,
the support comprises a hard plate layer (321), the hard plate layer comprises a first surface (321a) and a second surface (321b) that are disposed opposite to each other in a thickness direction of the hard plate layer,
at least one gap (322) is disposed on a part that is of the hard plate layer and that corresponds to the bending area, the gap penetrates a thickness direction of the hard plate layer,
a flexible strip (324) is disposed in each gap,
a length direction of the flexible strip is the same as an extension direction of the gap,
wherein there is a spacing between the flexible strip and a side wall of the gap in a width direction of the flexible strip, and **characterised in that**:
the support further comprises a flexible layer (325), the flexible layer is located on the first surface of the hard plate layer, the flexible strip is fastened to the flexible layer, and the flexible layer covers at least the bending area.

2. The support according to claim 1, wherein the flexible layer covers the bending area, a thickness of the hard plate layer located in the bending area is less than a thickness of the hard plate layer located in the support area, a thickness of the flexible layer is a difference between the thickness of the hard plate layer located in the bending area and the thickness of the hard plate layer located in the support area, the flexible layer covers the bending area, and a surface that is of the flexible layer and that is away from the flexible strip is coplanar with a part that is of the first surface and that is located in the support area.

3. The support according to claim 1, wherein the flexible layer covers the bending area and the two support areas, both the first surface and a surface that is of the flexible layer and that is away from the flexible strip are smooth surfaces, and the surface that is of the flexible layer and that is away from the flexible strip is parallel to the first surface.

4. The support according to claim 1, wherein an edge of the flexible layer is embedded in the hard plate layer.

5. The support according to any one of claims 1 to 4, wherein the hard plate layer comprises the first surface and the second surface that are disposed opposite to each other in the thickness direction of the hard plate layer, and the spacing between the flexible strip and the side wall of the gap gradually increases in a direction from the first surface to the second surface.

6. The support according to claim 5, wherein a width of the gap is the same at each position in a thickness direction of the support, and a width of the flexible strip gradually decreases in the direction from the first surface to the second surface of the hard plate layer.

7. The support according to claim 5, wherein a width of the flexible strip is the same at each position in a thickness direction of the support, and a width of the gap gradually increases in the direction from the first surface to the second surface of the hard plate layer.

8. The support according to any one of claims 1 to 4, wherein a width of the gap is the same at each position in a thickness direction of the support, and the spacing between the flexible strip and the side wall of the gap is the same at each position in the thickness direction of the support.

9. The support according to claim 1, wherein both the flexible layer and the flexible strip are made of a deformable elastic material.

10. The support according to claim 1, wherein a material for making the flexible layer and a material for making the flexible strip are the same or different, and the flexible layer and the flexible strip are obtained by using a same process.

11. The support according to claim 1, wherein a width of the spacing between the flexible strip and the side wall of the gap in the width direction of the flexible strip ranges from 0.02 mm to 0.2 mm.

12. A display assembly (30), comprising a display (31) and the support (32) according to any one of claims 1 to 11, wherein the display is fastened to the support and is located on a side of the hard plate layer; the display comprises two non-bending portions and a bending portion connected between the two non-bending portions, the bending portion is bendable, the two non-bending portions are respectively disposed opposite to the two support areas of the support, the bending portion is disposed opposite to a bending area of the support, and the bending portion is bendable.

13. An electronic device (100), comprising a first housing (10), a second housing (20), and the display assembly according to claim 12, wherein the two non-bending portions of the display of the display assembly are respectively fastened to the first housing and the second housing, the first housing and the second housing are configured to be folded relative to each other to a closed state, or unfolded relative to each other to an open state, and when the first housing and the second housing are in the closed state, the bending portion and a part that is of the support and that is in the bending area are bent.

## Patentansprüche

1. Träger (32) für eine flexible Anzeige, umfassend zwei Trägerbereiche und einen Biegebereich (32b), der zwischen den zwei Trägerbereichen verbunden ist, wobei der Träger dazu konfiguriert ist, in dem Biegebereich gebogen zu werden,
der Träger eine Hartplattenschicht (321) umfasst, die Hartplattenschicht eine erste Oberfläche (321a) und eine zweite Oberfläche (321b) umfasst, die einander gegenüberliegend in einer Dickenrichtung der Hartplattenschicht angeordnet sind,
mindestens ein Spalt (322) an einem Teil angeordnet ist, der zu der Hartplattenschicht gehört und der dem Biegebereich entspricht,
der Spalt eine Dickenrichtung der Hartplattenschicht durchdringt,
ein flexibler Streifen (324) in jedem Zwischenraum angeordnet ist,
eine Längsrichtung des flexiblen Streifens gleich einer Erstreckungsrichtung des Spalts ist,
wobei ein Abstand zwischen dem flexiblen Streifen und einer Seitenwand des Spalts in einer Breitenrichtung des flexiblen Streifens besteht, und durch Folgendes gekennzeichnet:
der Träger umfasst ferner eine flexible Schicht (325), die flexible Schicht befindet sich auf der ersten Oberfläche der Hartplattenschicht, der flexible Streifen ist an der flexiblen Schicht befestigt und die flexible Schicht bedeckt mindestens den Biegebereich.

2. Träger nach Anspruch 1, wobei die flexible Schicht den Biegebereich bedeckt, eine Dicke der Hartplattenschicht, die sich in dem Biegebereich befindet, geringer ist als eine Dicke der Hartplattenschicht, die sich in dem Trägerbereich befindet, eine Dicke der flexiblen Schicht eine Differenz zwischen der Dicke der Hartplattenschicht, die sich in dem Biegebereich befindet, und der Dicke der Hartplattenschicht, die sich in dem Trägerbereich befindet, ist, die flexible Schicht den Biegebereich bedeckt und eine Oberfläche, die zu der flexiblen Schicht gehört und die von dem flexiblen Streifen entfernt ist, koplanar mit einem Teil ist, der zu der ersten Oberfläche gehört und der sich in dem Trägerbereich befindet.

3. Träger nach Anspruch 1, wobei die flexible Schicht den Biegebereich und die zwei Trägerbereiche bedeckt, sowohl die erste Oberfläche als auch eine Oberfläche, die zu der flexiblen Schicht gehört und die von dem flexiblen Streifen entfernt ist, glatte Oberflächen sind und die Oberfläche, die zu der flexiblen Schicht gehört und die von dem flexiblen Streifen entfernt ist, parallel zu der ersten Oberfläche ist.

4. Träger nach Anspruch 1, wobei eine Kante der flexiblen Schicht in die Hartplattenschicht eingebettet ist.

5. Träger nach einem der Ansprüche 1 bis 4, wobei die Hartplattenschicht die erste Oberfläche und die zweite Oberfläche umfasst, die einander gegenüberliegend in der Dickenrichtung der Hartplattenschicht angeordnet sind, und der Abstand zwischen dem flexiblen Streifen und der Seitenwand des Spalts in einer Richtung von der ersten Oberfläche zu der zweiten Oberfläche allmählich zunimmt.

6. Träger nach Anspruch 5, wobei eine Breite des Spalts an jeder Stelle in einer Dickenrichtung des Trägers gleich ist und eine Breite des flexiblen Streifens in der Richtung von der ersten Oberfläche zu der zweiten Oberfläche der Hartplattenschicht allmählich abnimmt.

7. Träger nach Anspruch 5, wobei eine Breite des flexiblen Streifens an jeder Stelle in einer Dickenrichtung des Trägers gleich ist und eine Breite des Spalts in der Richtung von der ersten Oberfläche zu der zweiten Oberfläche der Hartplattenschicht allmählich zunimmt.

8. Träger nach einem der Ansprüche 1 bis 4, wobei eine Breite des Spalts an jeder Stelle in einer Dickenrichtung des Trägers gleich ist und der Abstand zwischen dem flexiblen Streifen und der Seitenwand des Spalts an jeder Stelle in der Dickenrichtung des Trägers gleich ist.

9. Träger nach Anspruch 1, wobei sowohl die flexible Schicht als auch der flexible Streifen aus einem verformbaren elastischen Material hergestellt sind.

10. Träger nach Anspruch 1, wobei ein Material zum Herstellen der flexiblen Schicht und ein Material zum Herstellen des flexiblen Streifens gleich oder unterschiedlich sind und die flexible Schicht und der flexible Streifen unter Verwendung eines gleichen Verfahrens erlangt werden.

11. Träger nach Anspruch 1, wobei eine Breite des Abstands zwischen dem flexiblen Streifen und der Seitenwand des Spalts in der Breitenrichtung des flexiblen Streifens im Bereich von 0,02 mm bis 0,2 mm liegt.

12. Anzeigeanordnung (30), umfassend eine Anzeige (31) und den Träger (32) nach einem der Ansprüche 1 bis 11, wobei die Anzeige an dem Träger befestigt ist und sich auf einer Seite der Hartplattenschicht befindet; die Anzeige zwei Nicht-Biegeabschnitte und einen Biegeabschnitt, der zwischen den zwei Nicht-Biegeabschnitten verbunden ist, umfasst, der Biegeabschnitt biegbar ist, die zwei Nicht-Biegeabschnitte jeweils gegenüberliegend zu den zwei Trägerbereichen des Trägers angeordnet sind, der Biegeabschnitt gegenüberliegend zu einem Biegebereich der Halterung angeordnet ist und der Biegeabschnitt biegbar ist.

13. Elektronische Vorrichtung (100), umfassend ein erstes Gehäuse (10), ein zweites Gehäuse (20) und die Anzeigeanordnung nach Anspruch 12, wobei die zwei Nicht-Biegeabschnitte der Anzeige der Anzeigeanordnung an dem ersten Gehäuse beziehungsweise an dem zweiten Gehäuse befestigt sind, das erste Gehäuse und das zweite Gehäuse dazu konfiguriert sind, relativ zueinander in einen geschlossenen Zustand gefaltet zu werden oder relativ zueinander in einen offenen Zustand entfaltet zu werden, und, wenn sich das erste Gehäuse und das zweite Gehäuse in dem geschlossenen Zustand befinden, der Biegeabschnitt und ein Teil, der zu dem Träger gehört und der sich in dem Biegebereich befindet, gebogen sind.

## Revendications

1. Support (32) pour affichage flexible, comprenant deux zones de support et une zone de pliage (32b) reliée entre les deux zones de support, dans lequel le support est configuré pour être plié dans la zone de pliage,
le support comprend une couche de plaque dure (321), la couche de plaque dure comprend une première surface (321a) et une seconde surface (321b) qui sont disposées à l'opposé l'une de l'autre dans un sens de l'épaisseur de la couche de plaque dure, au moins un espace (322) est disposé sur une partie de la couche de plaque dure qui correspond à la zone de pliage,
l'espace pénètre dans un sens de l'épaisseur de la couche de plaque dure,
une bande flexible (324) est disposée dans chaque espace,
un sens de la longueur de la bande flexible est le même qu'un sens de prolongement de l'espace,
dans lequel il y a un espacement entre la bande flexible et une paroi latérale de l'espace dans un sens de la largeur de la bande flexible, et **caractérisé en ce que** :
le support comprend également une couche flexible (325), la couche flexible est située sur la première surface de la couche de plaque dure, la bande flexible est fixée à la couche flexible, et la couche flexible recouvre au moins la zone de pliage.

2. Support selon la revendication 1, dans lequel la couche flexible recouvre la zone de pliage, une épaisseur de la couche de plaque dure située dans la zone de pliage est inférieure à une épaisseur de la couche de plaque dure située dans la zone de support, une épaisseur de la couche flexible est une différence entre l'épaisseur de la couche de plaque dure située dans la zone de pliage et l'épaisseur de la couche de plaque dure située dans la zone de support, la couche flexible recouvre la zone de pliage, et une surface de la couche flexible qui est éloignée de la bande flexible est coplanaire avec une partie de la première surface qui est située dans la zone de support.

3. Support selon la revendication 1, dans lequel la couche flexible recouvre la zone de pliage et les deux zones de support, la première surface et une surface de la couche flexible qui est éloignée de la bande flexible sont toutes deux des surfaces lisses, et la surface de la couche flexible qui est éloignée de la bande flexible est parallèle à la première surface.

4. Support selon la revendication 1, dans lequel un bord de la couche flexible est incrusté dans la couche de plaque dure.

5. Support selon l'une quelconque des revendications 1 à 4, dans lequel la couche de plaque dure comprend la première surface et la seconde surface qui sont disposées à l'opposé l'une de l'autre dans le sens de l'épaisseur de la couche de plaque dure, et l'espacement entre la bande flexible et la paroi latérale de l'espace augmente progressivement dans un sens allant de la première surface vers la seconde surface.

6. Support selon la revendication 5, dans lequel une largeur de l'espace est la même au niveau de chaque position dans un sens de l'épaisseur du support, et une largeur de la bande flexible diminue progressivement dans le sens allant de la première surface vers la seconde surface de la couche de plaque dure.

7. Support selon la revendication 5, dans lequel une largeur de la bande flexible est la même au niveau de chaque position dans un sens de l'épaisseur du support, et une largeur de l'espace augmente progressivement dans le sens allant de la première surface vers la seconde surface de la couche de plaque dure.

8. Support selon l'une quelconque des revendications 1 à 4, dans lequel une largeur de l'espace est la même au niveau de chaque position dans un sens de l'épaisseur du support, et l'espacement entre la bande flexible et la paroi latérale de l'espace est le même au niveau de chaque position dans le sens de l'épaisseur du support.

9. Support selon la revendication 1, dans lequel la couche flexible et la bande flexible sont toutes deux constituées d'un matériau élastique déformable.

10. Support selon la revendication 1, dans lequel un matériau de fabrication de la couche flexible et un matériau de fabrication de la bande flexible sont identiques ou différents, et la couche flexible et la bande flexible sont obtenues en utilisant un même processus.

11. Support selon la revendication 1, dans lequel une largeur de l'espacement entre la bande flexible et la paroi latérale de l'espace dans le sens de la largeur de la bande flexible s'échelonne de 0,02 mm à 0,2 mm.

12. Ensemble d'affichage (30), comprenant un affichage (31) et le support (32) selon l'une quelconque des revendications 1 à 11, dans lequel l'affichage est fixé au support et est situé sur un côté de la couche de plaque dure ; l'affichage comprend deux parties non pliantes et une partie pliante reliée entre les deux parties non pliantes, la partie pliante est pliable, les deux parties non pliantes sont respectivement disposées à l'opposé des deux zones de support du support, la partie pliante est disposée à l'opposé d'une zone de pliage du support, et la partie pliante est pliable.

13. Dispositif électronique (100), comprenant un premier boîtier (10), un second boîtier (20) et l'ensemble d'affichage selon la revendication 12, dans lequel les deux parties non pliantes de l'affichage de l'ensemble d'affichage sont respectivement fixées au premier boîtier et au second boîtier, le premier boîtier et le second boîtier sont configurés pour être pliés l'un par rapport à l'autre dans un état fermé, ou dépliés l'un par rapport à l'autre dans un état ouvert, et lorsque le premier boîtier et le second boîtier sont dans l'état fermé, la partie pliante et une partie du support qui se trouve dans la zone de pliage sont pliées.
